# EUROPÄISCHE PATENTSCHRIFT

(11) **EP 2 380 829 B1**
(45) Veröffentlichungstag und Bekanntmachung des Hinweises auf die Patenterteilung: **24.08.2016**
(21) Anmeldenummer: 11157497.6
(22) Anmeldetag: 09.03.2011
(51) Int. Cl.: B65G 9/00

(54) **Modulsortiment zur Herstellung von Fördergutträgerlaufwerken in verschiedenen Varianten für eine Hängefördereinrichtung**
Range of modules for producing different types of load carrier running gears for an overheadconveyor device
Ensemble de modules pour la fabrication de différents types de trains de roulement pour un dispositif de transport de marchandises suspendues

(30) Priorität: 21.04.2010 DE 102010028040
(43) Veröffentlichungstag der Anmeldung: 26.10.2011
(73) Patentinhaber: RSL Logistik GmbH & Co. KG, 86899 Landsberg (DE)
(72) Erfinder:
(74) Vertreter: Weickmann & Weickmann PartmbB

(56) Entgegenhaltungen:
- DE-C1- 19 918 116
- DE-U1- 20 106 453
- US-A- 1 336 370

## Beschreibung

Die Erfindung betrifft ein Modulsortiment zur Herstellung von Fördergutträgerlaufwerken in verschiedenen Varianten für eine Hängefördereinrichtung.

Bei den herzustellenden Fördergutträgerlaufwerken handelt es sich um sogenannte V- oder U-Trolleylaufwerke für Fördergutträger, wie sie z.B. in der EP 0 516 969 A1, der EP 1 059 247 A1 oder der EP 1 249 404 B1 beschrieben sind. Diese Fördergutträgerlaufwerke weisen jeweils einen V-förmigen oder U-förmigen Bügel auf, welcher an jedem seiner beiden abstehenden, freien Schenkelenden eine drehbar gelagerte Laufrolle trägt. Im Förderbetrieb stützt sich der Bügel mit seinen Laufrollen an äußeren Schrägflächen einer ein Satteldachprofil aufweisenden Führungsschiene der Hangefördereinrichtung ab, so dass der Bügel mit seinem Scheitel nach unten hängt. Häufig werden zwei derartige Fördergutträgerlaufwerke durch eine Tragstange miteinander verbunden, um einen Fördergutträger zu realisieren. Die Tragstange ist dabei an ihren beiden Stirnenden über eine Gelenkanordnung gelenkig mit den Bügeln der Fördergutträgerlaufwerke verbunden, so dass der Fördergutträger Kurvenfahrten und/oder Steigungs- bzw. Neigungsfahrten durchführen kann.

Solche Fördergutträger mit U- oder V-Bügellaufwerken werden für unterschiedliche Belastungszustände im Förderbetrieb konzipiert und realisiert. Die U- oder V-Bügelgehäuse sind bei Fördergutträgern für niedrige bis mittlere Belastung häufig aus einem Kunststoff hergestellt und weisen oft Kopplungsmechanismen auf, mittels derer Fördergutträger aneinander koppelbar sind, um einen Förderzug zu bilden.

Fördergutträger für mittlere bis große Belastung haben oft U- oder V-Bügel aus Metall. In der EP 1 249 404 B1 ist ein Fördergutträger für größere Belastung offenbart, bei dem die V-Bügel ein Spritzgussgehäuse aus Kunststoff-halbschalen und eine darin aufgenommenen Armierungsstruktur aus Metall aufweisen. Die Armierungsstruktur dient unmittelbar als Halter für Achswellen der Laufrollen und als Stützstruktur für einen gelenkig in der Armierungsstruktur gelagerten stiftförmigen Lasthalter am unteren Scheitelende des V-Bügels. Bei den Fördergutträgern sind die beiden Fördergutträgerlaufwerke an den unteren Lasthaltern durch eine Tragstange oder dgl. verbunden. Eine Weiterbildung des aus der EP 1 059 247 A1 und aus der EP 0 516 969 A bekanntem Rollenlaufwerk ist in der gattungsgemäßen DE 201 06 453 U1 offenbart, wobei dabei in dem Laufwerksgehäuse eine vom Meterial des Laufwerksgehäuse gesonderte Armierungsstruktur untergebracht ist, welche mit ersten und zweiten Stützflächenanordnungen des Rollenlaufwerks ausgeführt ist und durchgehend zusammenhängend zwischen den beiden Stützflächenanordnungen verläuft.

Bei den bisher bekannten Fördergutträgerlaufwerken wurden für die unterschiedlichen Belastungsklassen jeweils eigene, individuelle Lö sungen realisiert.

Der vorliegenden Erfindung liegt die Aufgabe zugrunde, ein technisches Konzept anzugeben, welches eine preisgünstigere und flexiblere Herstellung von Fördergutträgerlaufwerken für unterschiedliche Produktanforderungen, insbesondere unterschiedliche Belastungen ermöglicht.

Zur Lösung dieser Aufgabe wird erfindungsgemäß ein Modulsortiment nach Anspruch 1 vorgeschlagen, wobei ein Modulsortiment zur Herstellung von Fördergutträgerlaufwerken in verschiedenen Varianten für eine Hängefördereinrichtung umfassend
- Gehäuseschalenteile die paarweise zu einem im Wesentlichen U- oder V-förmigen, von einem Verbindungsabschnitt abstehende Schenkel aufweisen - den Basisgehäuse zusammenfügbar sind und Hohlkammerbereiche aufweisen, die im zusammengefügten Zustand eine jeweilige Rollenhalterungsaufnahmehohlkammer z.B. an den freien Enden der Schenkel, eine Lasthalteraufnahmehohlkammer z.B. in dem Verbindungsabschnitt und eine Armierungsaufnahmehohlkammer z.B. in dem Verbindungsabschnitt und den Schenkeln des Basisgehäuses bilden,
- Rollenhalterungen wenigstens einer Bauart, die zur fixierten Aufnahme in den Rollenhalterungsaufnahmehohlkammern dimensioniert sind und jeweils eine im funktionsfertigen Einbauzustand außen liegende Laufrolle tragen,
- Lasthalter wenigstens einer Bauart, die zur Aufnahme in den Lasthalteraufnahmehohlkammern dimensioniert sind und jeweils einen im funktionsfertigen Einbauzustand außen liegenden Lastenbefestigungsabschnitt haben,
- Armierungseinsätze einer ersten Bauart, die zur Aufnahme in den Armierungsaufnahmehohlkammern dimensioniert sind und jeweils einen im funktionsfertigen Einbauzustand außen liegenden Lastenbefestigungsabschnitt aufweisen, wobei zur Herstellung einer ersten Fördergutträgerlaufwerksvariante:
   ein Paar von den Gehäuseschalenteilen,
   ein Paar von den Rollenhalterungen mit Laufrollen und einer der Lasthalter unter Weglassung des Armierungseinsatzes kombinierbar sind,
   und zur alternativen Herstellung einer zweiten Fördergutträgerlaufwerksvariante
   ein Paar von den Gehäuseschalenteilen,
   ein Paar von den Rollenhalterungen mit Laufrollen und
   ein Armierungseinsatz der ersten Bauart kombinierbar sind.

Das Modulsortiment nach der Erfindung erlaubt die Verwendung gleicher Gehäuseschalenteile und somit gleicher Basisgehäuse und ebenfalls gleicher Rollenhalterungen für die Herstellung der ersten Fördergutträgerlaufwerksvariante für geringere Belastung und für die Herstellung der armierten zweiten Fördergutträgerlaufwerksvariante für größere Belastungen. Eine Varianz liegt daher in Bezug auf den Lasthalter und den Armierungseinsatz mit Lastenbefestigungsabschnitt vor.

Die Erfindung bietet somit ein Baukastensystem zur Herstellung unterschiedlicher Fördergutträgerlaufwerke unter Verwendung gleicher Basisbauteile wie Gehäuse, Rollenhalterungen, Rollen etc.. Dies erlaubt die Realisierung von Varianten auf preisgünstige und flexible Art.

Die erste Fördergutträgerlaufwerksvariante eignet sich insbesondere für einen unteren Belastungsbereich für den Transport von Lasten mit einer Masse bis zu etwa 25 - 30 kg. Das Basisgehäuse ist dabei vorzugsweise aus einem stabilen Kunststoff hergestellt, so dass das Eigengewicht der Fördergutträgerlaufwerke klein gehalten werden kann, was für den Förderbetrieb mit und ohne Belastung vorteilhaft ist.

Die zweite Fördergutträgerlaufwerksvariante empfiehlt sich für stärker belastete Fördergutträger. Die Armierungseinsätze können für unterschiedliche Belastungszustände noch diversifiziert sein. So wird vorgeschlagen, dass auch Armierungseinsätze einer sich von den Armierungseinsätzen der ersten Bauart im Aufbau bzw. in den Dimensionen unterscheidenden zweiten Bauart bereitgestellt sind, die zur Aufnahme in den Armierungsaufnahmehohlkammern dimensioniert sind und jeweils einen im funktionsfertigen Einbauzustand außen außerhalb des Basisgehäuse liegenden Lastenbefestigungsabschnitt aufweisen, wobei die Armierungseinsätze der zweiten Bauart zur Herstellung einer dritten Fördergutträgerlaufwerksvariante mit einem Paar von den Gehäuseschalenteilen und einem Paar von den Rollenhalterungen mit Laufrollen kombinierbar sind. Die Hohlkammerbereiche der Gehäuseschalenteile sind vorzugsweise so ausgeformt und dimensioniert, dass die darin unterzubringenden Komponenten wie Rollenhalterungen, Lasthalter, Armierungseinsätze uggf. weitere Modulteile darin passend lagefixiert oder bei Bedarf ggf. gelenkig beim Zusammenfügen der Gehäuseschalenteile eingesperrt werden können.

Gemäß einer besonders bevorzugten Ausführungsform der Erfindung sind die Gehäuseschalenteile identisch als Gehäusehalbschalen ausgebildet, so dass beim Zusammenbau eines Basisgehäuses kein Unterschied zwischen den beiden zusammenzufügenden Gehäuseschalenteilen gemacht werden muss. Es handelt sich dabei vorzugsweise um Kunststoff-Spritzgußteile. Gemäß einer besonders bevorzugten Ausführungsform der Erfindung haben die Gehäuseschalenteile einander komplementäre Schnappverbindungsmittel, so dass die Gehäuseschalenteile zusammengesteckt werden können und dabei durch eine Schnappebefestigung miteinander fest verbunden werden. Die Schnappbefestigungsmittel können so ausgelegt sein, dass ein Lösen der Schnappbefestigung bei Bedarf möglich ist.

Die Armierungseinsätze der ersten Bauart sind vorzugsweise Einlegeplatten aus einem mechanisch stabileren Material als dass der Gehäuseschalenteile. Hierfür bietet sich Metall, z.B. Aluminium oder Stahl, an.

Dies gilt auch für etwaige Armierungseinsätze weiterer Bauarten.

Die Armierungsaufnahmehohlkammern haben vorzugsweise eine Einlegekontur, die der Außenkontur der Armierungseinlegeplatten im wesentlichen entspricht, so dass die Einlegeplatten gut fixiert in dem Basisgehäuse untergebracht werden können. Ferner können die Einlegeplatten mit Löchern ausgebildet sein, durch welche hindurch Fixierungsstifte der Gehäuseschalenteile hindurchgeführt werden.

Vorzugsweise ist der Lastenbefestigungsabschnitt der Armierungseinsätze der ersten Bauart ein Haken mit einem Hakenmaul, in das z.B. eine Öse einer Last oder ein Lasttragstange eingehängt werden kann. Gemäß einer Weiterbildung dieser Ausführungsform können jeweils zwei identische Einlegeplatten in entgegengesetzten Einbaulagen aneinanderliegend so in der Armierungsaufnahmehohlkammer aufgenommen werden, dass die Haken gemeinsam eine außen liegende geschlossene Öse bilden, die mit einer weiteren Öse z.B. einer Last- oder einer Tragstange oder dgl. verbunden ist. Dabei kann diese weitere Öse beim Zusammenbau eines erfindungsgemäßen Fördergutträgerlaufwerks der hier betrachteten zweiten Variante zunächst in die Haken der beiden Einlegeplatten eingehängt werden, bevor die Einlegeplatten in ihre Einbaulagen gebracht werden und dabei die armierungseinsatzseitige geschlossene Öse bilden.

Armierungseinsätze einer zweiten Bauart sind vorzugsweise ebenfalls als Einlegeplatten ausgebildet, die aus einem mechanisch stabileren Material als dass der Gehäuseschalenteile bestehen, etwa aus Metall, und die eine größere Plattendicke als die Armierungseinsätze der ersten Bauart aufwei - sen, so dass eine größere Stabilität des herzustellenden Fördergutträger - laufwerks der dritten Variante erhalten wird.

Gemäß einer Weiterbildung der Erfindung weisen die Gehäuseschalenteile Hohlkammerbereiche auf, die im zusammengefügten Zustand eine jeweilige Transponderaufnahmehohlkammer zur Aufnahme eines passiven oder aktiven Transponders, insbesondere RFID-Trägers, in dem Basisgehäuse bilden. Solche Transponder werden zur jeweiligen Ortung eines Fördergutträgers längs der Förderstrecke der Hängefördereinrichtung genutzt, insbesondere um den Warenfluß in der Hängefördereinrichtung zu kontrollieren.

Die Gehäuseschalenteile können weitere Hohlkammerbereiche aufweisen, die funktionelle Module oder Modulkomponenten aufnehmen können. Eine solche Modulkomponente kann z.B. eine Halterung eines Mitnahmeeingriffselementes oder eines Kopplungselementes sein. Mitnahmeeingriffselemente können Zähne sein, die mit einer Förderkette längs der Förderstrecke der Hängefördereinrichtung in Eingriff treten können, so dass es zu einer form - schlüssigen Mitnahme des betreffenden Fördergutträgers längs der Förderstrecke kommt. Kopplungselemente dienen dazu, Fördergutträgerlaufwerke aufeinander folgender Fördergutträger zu koppeln, um Förderzüge zu bilden.

Vorzugsweise ist der Lasthalter bei der ersten Fördergutträgerlaufwerksvariante gelenkig bewegbar in der Lasthalteraufnahmehohlkammer einbaubar.

Ein Ausführungsbeispiel eines Modulsortiments nach der Erfindung und daraus herstellbare Fördergutträgerlaufwerksvarianten werden nachste hend unter Bezugnahme auf die Figuren näher erläutert.
- Figur 1: zeigt eine erste Fördergutträgerlaufwerksvariante in einer perspektiven Darstellung;
- Figur 2: zeigt die erste Fördergutträgerlaufwerksvariante in einer Seitenansicht;
- Figur 3: zeigt die erste Fördergutträgerlaufwerksvariante mit einem zusätzlich angebauten Kopplungsmodul in einer Seitenansicht;
- Figur 4: zeigt eine Gehäusehalbschale der ersten Fördergutträgerlaufwerksvariante in einer perspektiven Darstellung mit in Sollposition eingelegten Zusatzmodulen;
- Figur 5: zeigt die erste Fördergutträgerlaufwerksvariante in einer perspektivischen Explosionsdarstellung;
- Figur 6: zeigt eine zweite Fördergutträgerlaufwerksvariante in einer perspektivischen Darstellung unter Weglassung einer Gehäusehalbschale;
- Figur 7: zeigt die zweite Fördergutträgerlaufwerksvariante aus Figur 6 in einer Seitenansicht unter Weglassung einer Gehäusehalbschale;
- Figur 8: zeigt die zweite Fördergutträgerlaufwerksvariante in einer perspektivischen Explosionsdarstellung;
- Figur 9: zeigt eine dritte Fördergutträgerlaufwerksvariante nach der Erfindung in perspektivischer Darstellung;
- Figur 10: zeigt die dritte Fördergutträgerlaufwerksvariante in Seitenansicht;
- Figur 11: zeigt die dritte Fördergutträgerlaufwerksvariante in einer perspektivischen Explosionsdarstellung.

Die im folgenden erläuterten Fördergutträgerlaufwerksvarianten sind aus einem Modulsortiment nach der Erfindung hergestellt.

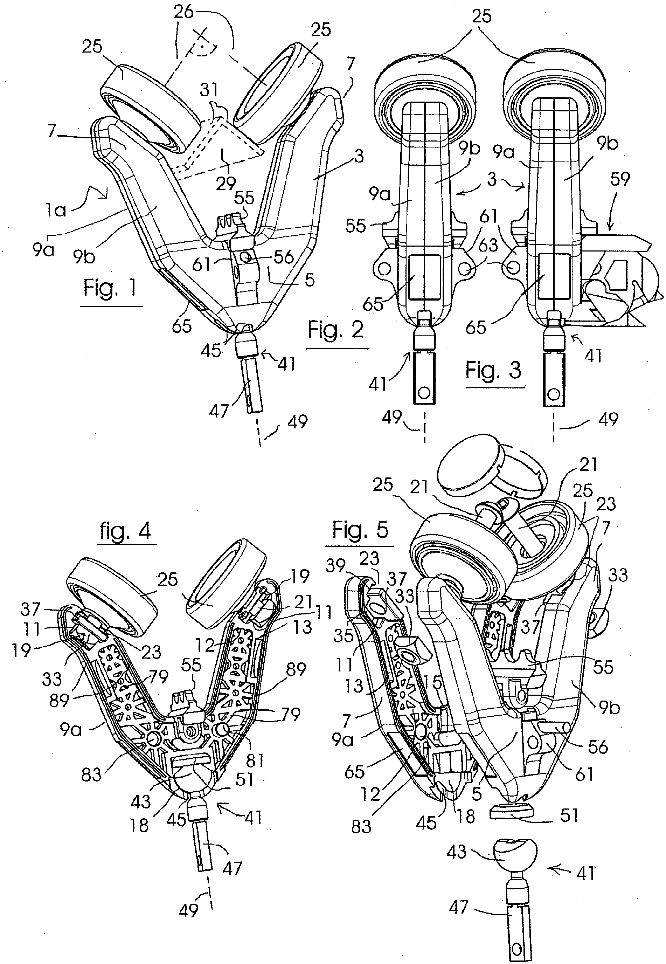

Wie in Figur 1 gut zu erkennen ist, hat das Fördergutträgerlaufwerk 1 a ein annähernd V-förmiges Basisgehäuse 3 mit zwei von einem Verbindungsabschnitt 5 abstehenden Schenkeln 7. Das Basisgehäuse 3 ist aus zwei gleichen Gehäusehalbschalen 9a, 9b zusammengesetzt, welche Hohlkammerbereiche 11, 13, 15, 18 aufweisen, die in dem zusammengefügten Zustand der beiden Gehäusehalbschalen 9a, 9b Hohlkammern bilden, in denen Module ganz oder teilweise aufgenommen sind.

Die Hohlkammerbereiche 11 an den freien Enden der Schenkel 7, 7 bilden paarweise Rollenhalterungsaufnahmehohlkammern, in denen Rollenhalterungen 19 untergebracht sind. Die Rollenhalterungen 19 weisen jeweils eine Achswelle 21 auf, die durch ein jeweiliges Durchgangsloch 23 von der betreffenden Rollenhalterungsaufnahmehohlkammer nach außen absteht und eine Rolle 25 drehbar lagert. Die Achswellen 21 stehen von den Gehäuseschenkeln 7 schräg nach oben ab, so dass sich die Drehachsen 26 der Rollen 25 in dem gezeigten Beispielsfall unter einem rechten Winkel schneiden.

In Figur 1 ist schematisch mit gestrichelten Linien eine satteldachförmige Laufschiene 29 einer Hängefördereinrichtung mit gestrichelten Linien angedeutet. Wie dargestellt, ist das Fördergutträgerlaufwerk 1 a im Förderbetrieb mit seinen Laufrollen 25 an den äußeren Schrägflächen 31 abgestützt, so dass die Laufrollen 25 an den Schrägflächen 31 bei einem Vorschub des Fördergutträgerlaufwerks 1 abrollen können und der Fördergutträger 1 a längs der Laufschienen 29 geführt bewegt wird.

Die Rollenhalterungen 19 umfassen eine hintere Vierkantschraube 33, die in einem rückwärtigen, an ihrer Außenabmessungen angepaßten Abschnitt 35 der Rollenhalterungsaufnahmehohlkammer unverdrehbar aufgenommen ist und die mit einer betreffenden Rollenachswelle 21 verschraubt ist. Jede Rollenhalterung 19 weist ferner eine auf der ihr zugeordneten Achswelle 21 aufsitzende, viereckige Distanz- und Halterungsscheibe 37 auf, die in einem vorderen Bereich 39 der betreffenden Rollenhalterungsaufnahmehohlkammer passgenau eingesetzt ist.

Die Rollenhalterungen 19 sind mit ihrem Rollen 25 als vorgefertigte Module vorgesehen. Zum Einbau werden die Rollenhalterungen 19 in die Hohlkammerbereiche einer Gehäusehalbschale 9a passend eingesteckt, so dass sie in der in Figur 4 gezeigten Weise bereits lagerichtig positioniert werden. Gesichert werden die Rollenhalterungen 19 in dieser Position durch Aufsetzen der zweiten Gehäusehalbschale 9b auf die erste Gehäusehalbschale 9a.

Wie aus Figur 1 zu ersehen ist, befindet sich der Verbindungsabschnitt 5 mit dem Scheitel des V-förmigen Basisgehäuses 3 in der normalen Benutzungsanordnung des Fördergutträgerlaufwerks 1 unterhalb der Laufschiene 29, wobei ein Lasthalter 41 an dem unteren Ende des Basisgehäuses 3 vorgesehen ist. Der Lasthalter 41 hat einen oberen, näherungsweise halbkugelförmigen Lagerungsabschnitt 43, der in einer von den Hohlkammerbereichen 18 der Gehäusehalbschalen 9a, 9b gebildeten Lasthalteraufnahmehohlkammer gelenkig gelagert ist. Der untere Bereich dieser Lasthalteraufnahmehohlkammer ist zu diesem Zweck kalottenförmig ausgebildet, wie dies insbesondere aus den Figuren 4 und 5 anhand des Verlaufs der Hohlkammerbereiche 18 nachzuvollziehen ist.

Die Lasthalteraufnahmehohlkammer hat eine untere Kreutzschlitzöffnung 45, wobei sich durch diese Öffnung 45 ein mit dem Lagerungsabschnitt 43 verbundener Halterungsstift 47 nach außen erstreckt. Der Halterungsstift 47 ist um seine Längsachse 49 drehbar und entsprechend der Beschränkung durch den Kreutzschlitz 45 schwenkbar. An dem Halterungsstift 47 kann z.B. eine Tragstange befestigt werden, die das Fördergutträgerlaufwerk 1 a mit einem weiteren Fördergutträgerlaufwerk 1 a verbindet, so dass die beiden Fördergutträgerlaufwerke und die Tragstange gemeinsam einen Fördergutträger bilden, der längs einer Laufschiene 29 verfahrbar ist. An die Tragstange können Haken von Kleiderbügeln oder sonstigen Warenträgern angehängt werden. Solche Fördergutträger können Kurvenstrecken und Steigungs-/Neigungsstrecken befahren, wobei die Lasthalter 41 aufgrund ihrer beweglichen Lagerung erforderliche Ausweichsbewegungen durchführen können.

Der Vollständigkeit halber sei noch darauf hingewiesen, dass eine Pufferscheibe 51 auf dem Lagerabschnitt 43 des Lasthalters 41 liegend in der Lasthalteraufnahmehohlkammer aufgenommen ist.

An seiner Oberseite weist der Verbindungsabschnitt 5 eine durch die Hohlkammerbereiche 15 gebildete Ausnehmung auf, welche zur Aufnahme eines Mitnahmeeingriffselementes 55 dient. Das Mitnahmeeingriffselement 55 weist in an sich bekannter Weise einige nach oben abstehende Zähne für die Ineingriffnahme durch eine (nicht gezeigte) Förderkette auf. Ein Fixierstift 56 dient zur Festlegung des Mitnahmeeingriffselementes 55 an dem Basisgehäuse 3.

Gemäß Figur 3 kann als weiteres Modul ein Kopplungsmodul 59 vorgesehen sein, welches in an sich bekannter Weise dazu dient einen damit ausgestatteten Fördergutträger mit einem gleichartigen weiteren Fördergutträger zu koppeln, so dass ein Fördergutträgerzug entsteht. Zur Anbringung eines solchen Kopplungsmoduls 59 an dem Basisgehäuse 3 weist dieses Halterungsnasen 61 mit Befestigungsaugen 63 auf.

Die Hohlkammerbereiche 13 dienen zur Aufnahme eines Transpondermoduls bzw. RFID-Trägers. Solche Transponder werden genutzt, um das Eintreffen des betreffenden Fördergutträgers an bestimmten Punkten der Förderstrecke zu überwachen.

Ferner ist seitlich unten an dem Basisgehäuse eine Fläche 65 zur Anbringung gedruckter Informationen, etwa eines Barcode-Labels vorgesehen, welches zur automatischen Registrierung und Ortung des betreffenden Fördergutträgers nutzbar ist.

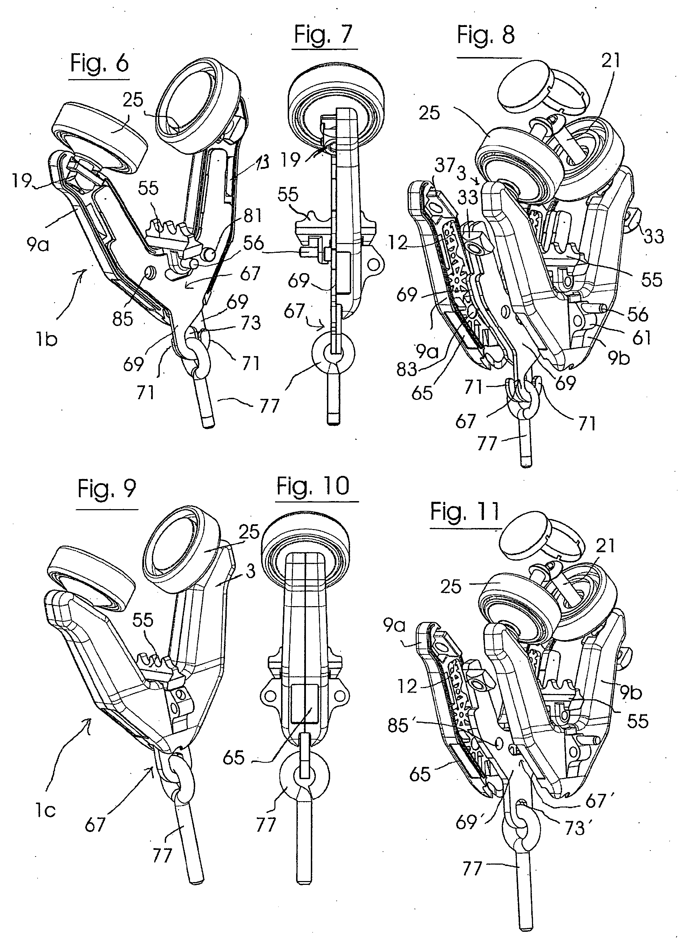

In den Figuren 6 - 8 ist eine mit dem Modulsortiment nach der Erfindung teilweise fertiggestellte zweite Fördergutträgerlaufwerksvariante 1 b gezeigt. Weggelassen ist in den Figuren 6 und 7 eine Gehäusehalbschale, um Einzelheiten innerhalb des Gehäuses deutlich erkennbar werden zu lassen. Für Komponenten der weiteren Fördergutträgerlaufwerksvarianten, die Komponenten der ersten Variante entsprechen, sind in den Figuren korrespondierend gleiche Bezugszeichen verwendet worden.

Die zweite Fördergutträgerlaufwerksvariante 1 b unterscheidet sich von der ersten dadurch, dass anstelle des Lasthalters 41 ein Armierungseinsatz 67 in dem Basisgehäuse 3 aufgenommen ist. Bei diesem Armierungseinsatz 67 handelt es sich um zwei identisch aufgebaute Einlegeplatten 69, die an ihren unteren Enden jeweils einen hakenförmigen Lastenbefestigungsabschnitt 71 aufweisen. Die Einlegeplatten 69 liegen in entgegengesetzten Einbaulagen bündig aneinander in einer Armierungsaufnahmehohlkammer, die aus den Hohlkammerbereichen 12 der Gehäusehalbschalen 9a, 9b gebildet ist. In dieser Einbaulage der Einlegeplatten 69 bilden die mit ihren Hakenmäulern zu entgegengesetzten Richtungen ausgerichteten Lastenbefestigungsabschnitte 71 eine geschlossene Öse 73, welche mit einer Öse eines an dem Lastenbefestigungsabschnitt 69 hängenden Stiftes 77 verbunden ist. An dem Stift 77 kann z.B. eine Tragstange befestigt werden, die zwei gleichartige Fördergutträgerlaufwerke 1 b miteinander verbindet. Die hakenförmigen Abschnitte 71 können vor dem Zusammenfügen der Einlegeplatten 69 in die geschlossene Öse des Halterungsstiftes 77 eingefädelt und dann in die Einbauposition gemäß Figur 6 gebracht werden.

Die Einlegeplatten 69 haben ebenfalls eine V-förmige Kontur, die oberhalb des Lastenbefestigungsabschnittes 71 der Kontur der Hohlkammerbereiche 12 der Gehäusehalbschalen 9a, 9b und somit der Kontur der daraus gebildeten Armierungsaufnahmehohlkammer entspricht.

Wie insbesondere aus Figur 4 zu ersehen ist, haben die Gehäusehalbschalen innenseitig ein Stützfachwerk aus Stegen 79, welches für eine gute Formstabilität und Belastbarkeit des Basisgehäuses 3 sorgt. Das Stützfachwerk 79 bildet den Boden der Hohlkammerbereiche 12. Aus Figur 4 ist ferner gut zu ersehen, dass die Gehäusehalbschale einen Positionierungsstift 81 sowie ein Positionierungsloch 83 aufweist. Beim Zusammenfügen der beiden Gehäusehalbschalen 9a, 9b nehmen die Positionierungslöcher 83 die Positionierungsstifte 81 der gegenseitigen Halbschalen 9a, 9b auf.

Bei der zweiten Fördergutträgerlaufwerksvariante 1 b gemäß Figur 6 durchsetzen die Positionierungsstifte 81 Durchgangslöcher 85 der Einlegeplatten 69.

In den Figuren 9 - 11 ist eine dritte Fördergutträgerlaufwerksvariante 1c gezeigt, die sich von der zweiten Fördergutträgerlaufwerksvariante 1 b dadurch unterscheidet, dass sie einen anderen Armierungseinsatz 67' aufweist. Bei dem Armierungseinsatz 67' handelt es sich um eine einzelne Einlegeplatte 69', die eine größere Plattendicke als die Einlegeplatten 69 aufweist. Der Lastenbefestigungsabschnitt 71' des Armierungseinsatzes 67' hat eine geschlossene Öse 73', an welcher ein Haltestift 77 unverlierbar angehängt ist. Die V-Kontur der Einlegeplatte 69' entspricht in der Draufsicht auf die Flächenseite im Wesentlichen der gemeinsamen Kontur der im Einbauzustand zusammengelegten Einlegeplatten 69 der ersten Fördergutträgerlaufwerksvariante 1 b. Die Einlegeplatte 69' passt daher in die Armierungsaufnahmehohlkammer des Basisgehäuses 3.

Das Modulsortiment nach der Erfindung stellt ein Baukastensystem zur Herstellung unterschiedlicher Fördergutträgerlaufwerksvarianten dar. Bei den gezeigten Ausführungsbeispielen haben die Fördergutträgerlaufwerksvarianten gleiche Basisgehäuse 3, gleiche Rollenhalterungsmodule 19 mit Rollen 25, gleiche Mitnahmeeingriffsmodule 55 und ggf. gleiche Kopplungsmodule 59. Unterschiede ergeben sich aufgrund der Lasthalter 41 und der Armierungseinsätze 67 und 67'.

Nicht gezeigt sind Abwandlungen des Rollenhalterungs-Rollenmoduls 19, 25, welche sich insbesondere durch die Art der Rollen unterscheiden.

Bei den Gehäusehalbschalen 9a, 9b handelt es sich vorzugsweise um Spritzgussteile aus Kunststoff mit einem integral eingeformten Stützfachwerk 79 und ebenso integral eingeformten Hohlkammerbereichen 11, 12, 13, 15, 18. Die Rollenhalterungen 19 sind vorzugsweise aus Metall, insbesondere Stahl gebildet. Dies gilt ebenso für die Armierungseinsätze 67, 67', wenngleich auch andere Materialien in Frage kommen. Aus einem Kunststoff sind vorzugsweise auch die Mitnahmeeingriffsmodule 55 und die Kopplungsmodule 59 gebildet.

Die Gehäusehalbschalen sind vorzugsweise mit Schnappverbindungsrippen/nuten 89 ausgebildet, so dass sie beim Aneinanderfügen eine stabile Schnappverbindung eingehen. Dabei soll es nicht ausgeschlossen sein, dass eine solche Schnappverbindung mit einem Werkzeug bedarfsweise lösbar ist. In alternativen Ausführungsformen kommen auch Schraubverbindungen für den Zusammenhalt der Gehäusehalbschalen 9a, 9b in Frage.

Die in den Figuren gezeigten drei Fördergutträgerlaufwerksvarianten 1 a, 1 b, 1c können für unterschiedliche Belastungszustände ausgelegt sein. So kann die erste Laufwerksvariante für Anhängelasten bis zu 25 kg - die zweite Laufwerksvariante für Anhängelasten bis z.B. 50 kg - und die dritte Laufwerksvariante für Anhängelasten bis z.B. 100 kg ausgelegt sein.

Als weitere Module können (hier nicht gezeigte) Tragstangen oder sonstige Tragelemente zur Verbindung zweier Fördergutträgerlaufwerke zu einem Förderträger vorgesehen sein.

## Patentansprüche

1. Modulsortiment zur Herstellung von Fördergutträgerlaufwerken in verschiedenen Varianten (1 a, 1 b, 1 c) für eine Hängefördereinrichtung,
umfassend
- Gehäuseschalenteile (9a, 9b) die paarweise zu einem im Wesentlichen U- oder V-förmigen, von einem Verbindungsabschnitt (5) abstehende Schenkel (7) aufweisenden Basisgehäuse (3) zusammenfügbar sind und Hohlkammerbereiche (11, 12, 13, 15, 18) aufweisen, die im zusammengefügten Zustand eine jeweilige Rollenhalterungsaufnahmehohlkammer, eine Lasthalteraufnahmehohlkammer und eine Armierungsaufnahmehohlkammer in dem Basisgehäuses (3) bilden,
- Rollenhalterungen (19) wenigstens einer Bauart, die zur fixierten Aufnahme in den Rollenhalterungsaufnahmehohlkammern dimensioniert sind und jeweils eine im funktionsfertigen Einbauzustand außen liegen - de Laufrolle (25) tragen,
- Lasthalter (41) wenigstens einer Bauart, die zur Aufnahme in den Lasthalteraufnahmehohlkammern dimensioniert sind und jeweils einen im funktionsfertigen Einbauzustand außen liegenden Lastenbefestigungsabschnitt (47) haben, **dadurch gekennzeichnet, dass** das Modulsortiment weiterhin umfasst:
- Armierungseinsätze (67) einer ersten Bauart, die zur Aufnahme in den Armierungsaufnahmehohlkammern dimensioniert sind und jeweils einen im funktionsfertigen Einbauzustand außen liegenden Lastenbefestigungsabschnitt (71) aufweisen,
wobei zur Herstellung einer ersten Fördergutträgerlaufwerksvariante (1a):
ein Paar von den Gehäuseschalenteilen (9a, 9b),
ein Paar von den Rollenhalterungen (19) mit Laufrollen (25) und einer der Lasthalter (41) unter Weglassung des Armierungseinsatzes (47) kombinierbar sind,
und zur alternativen Herstellung einer zweiten Fördergutträgerlaufwerksvariante (1 b)
ein Paar von den Gehäuseschalenteilen (9a, 9b),
ein Paar von den Rollenhalterungen (19) mit Laufrollen (25) und
ein Armierungseinsatz (67) der ersten Bauart kombinierbar sind.

2. Modulsortiment nach Anspruch 1, ferner umfassend Armierungseinsätze (67') einer sich von den Armierungseinsätzen (67) der ersten Bauart unterscheidenden zweiten Bauart, die zur Aufnahme in den Armierungsaufnahmehohlkammem dimensioniert sind und jeweils einen im funktionsfertigen Einbauzustand außen liegenden Lastenbefestigungsabschnitt (71') aufweisen,
wobei die Armierungseinsätze (67') der zweiten Bauart zur Herstellung einer dritten Fördergutträgerlaufwerksvariante (1c) mit einem Paar von den Gehäuseschalenteilen (9a, 9b) und einem Paar von den Rollenhalterungen (19) mit Laufrollen (25) kombinierbar sind.

3. Modulsortiment nach Anspruch 1 oder 2, wobei die Gehäuseschalenteile (9a, 9b) identisch sind.

4. Modulsortiment nach Anspruch 1, 2 oder 3, wobei die Gehäuseschalenteile (9a, 9b) aus einem Kunststoff gebildet sind.

5. Modulsortiment nach einem der vorher gehenden Ansprüche, wobei die Armierungseinsätze (67) der ersten Bauart Einlegeplatten (69) aus einem mechanisch stabileren Material als das der Gehäuseschalenteile (9a, 9b), insbesondere aus Metall, sind.

6. Modulsortiment nach einem der vorher gehenden Ansprüche, wobei der Lastenbefestigungsabschnitt (71) der Armierungseinsätze (67) der ersten Bauart ein Haken ist.

7. Modulsortiment nach Anspruch 5 und Anspruch 6, wobei jeweils zwei identische Einlegeplatten (69) in entgegen gesetzten Einbaulagen aneinander liegend so in der Armierungsaufnahmehohlkammer aufgenommen werden können, dass die Haken gemeinsam eine außen liegende Öse (73) bilden.

8. Modulsortiment nach Anspruch 2, wobei die Armierungseinsätze (67') der zweiten Bauart Einlegeplatten (69') aus einem mechanisch stabileren Material als das der Gehäuseschalenteile (9a, 9b), insbesondere aus Metall sind und eine größere Plattendicke als die Einlegeplatten (69) der ersten Bauart aufweisen.

9. Modulsortiment nach einem der vorher gehenden Ansprüche, wobei die Gehäuseschalenteile (9a, 9b) Hohlkammerbereiche (13) aufweisen, die im zusammengefügten Zustand eine jeweilige Transponderaufnahmehohlkammer zur Aufnahme eines Transponders, insbesondere RFID-Trägers, in dem Basisgehäuse (3) bilden.

10. Modulsortiment nach einem der vorher gehenden Ansprüche, wobei die Gehäuseschalenteile (9a, 9b) Hohlkammerbereiche (15) aufweisen, die im zusammengefügten Zustand eine jeweilige Hohlkammer zur Aufnahme einer Halterung eines Mitnahmeeingriffselementes (55) in dem Basisgehäuse bilden.

11. Modulsortiment nach einem der vorher gehenden Ansprüche, wobei der Lasthalter (41) gelenkig bewegbar in die Lasthalteraufnahmehohlkammer einbaubar ist.

## Claims

1. Range of modules for producing different types of conveying goods carrier running gears (1 a, 1 b, 1 c) for an overhead conveyor device,
comprising
- housing shell parts (9a, 9b) which can be assembled in pairs to a substantially U-shaped or V-shaped basic housing (3) comprising legs (7) extending from a connecting part (5) and hollow chamber portions (11, 12, 13, 15, 18) which in the assembled state form a respective roller holder receiving hollow chamber, a load holder receiving hollow chamber and a reinforcement receiving hollow chamber in the basic housing (3),
- roller holders (19) of at least one type, dimensioned for a fixed reception in the roller holder receiving hollow chambers and each carrying a track roller (25) situated outside in the ready-to-use mounted state,
- load holders (41) of at least one type, dimensioned for reception in the load holder receiving hollow chambers and each comprising a load fixation section (47) situated outside in the ready-to-use mounted state,
**characterized in that** the range of modules further comprises:
- reinforcement insets (67) of a first type, dimensioned for reception in the reinforcement receiving hollow chambers and each comprising a load fixation section (71) situated outside in the ready-to-use mounted state,
wherein for the manufacture of a first type of conveying goods carrier running gear (1 a):
a pair of the housing shell parts (9a, 9b),
a pair of the roller holders (19) with track rollers (25) and one of the load holders (41) can be combined omitting the reinforcement inset (47),
and wherein for the alternative manufacture of a second type of a conveying goods carrier running gear (1 b)
a pair of the housing shell parts (9a, 9b),
a pair of the roller holders (19) with track rollers (25) and a reinforcement inset (67) of the first type can be combined.

2. Range of modules according to claim 1, further comprising reinforcement insets (67') of a second type, different from the reinforcement insets (67) of the first type, dimensioned for reception in the reinforcement receiving hollow chambers and each comprising a load fixation section (71') situated outside in the ready-to-use mounted state,
wherein said reinforcement insets (67') of the second type can be combined with a pair of housing shell parts (9a, 9b) and a pair of roller holders (19) with track rollers (25) for the manufacture of a third type of a conveying goods carrier running gear (1c).

3. Range of modules according to claim 1 or 2, wherein said housing shell parts (9a, 9b) are identical.

4. Range of modules according to claim 1, 2 or 3, wherein said housing shell parts (9a, 9b) are made of a plastic material.

5. Range of modules according to one of the preceding claims, wherein said reinforcement insets (67) of the first type are insertion plates (69) made of a mechanically more stable material than that of the housing shell parts (9a, 9b), in particular of metal.

6. Range of modules according to one of the preceding claims, wherein the load fixation section (71) of the reinforcement insets (67) of the first type is a hook.

7. Range of modules according to claim 5 and claim 6, wherein two identical insertion plates (69) can be received in the reinforcement receiving hollow chamber lying next to each other in opposite mounting situations, so that the hooks together form an outside eyelet (73).

8. Range of modules according to claim 2, wherein the reinforcement insets (67') of the second type are insertion plates (69') made of a mechanically more stable material than that of the housing shell parts (9a, 9b), in particular of metal, and have a greater plate thickness than the insertion plates (69) of the first type.

9. Range of modules according to one of the preceding claims, wherein the housing shell parts (9a, 9b) have hollow chamber portions (13) which in the assembled state form a respective transponder receiving hollow chamber for receiving a transponder, in particular an RFID carrier, in the basic housing (3).

10. Range of modules according to one of the preceding claims, wherein the housing shell parts (9a, 9b) comprise hollow chamber portions (15) which in the assembled state form a respective hollow chamber for receiving a support for a transfer engagement element (55) in the basic housing.

11. Range of modules according to one of the preceding claims, wherein said load holder (41) is mounted articulately movable in the load holder receiving hollow chamber.

## Revendications

1. Ensemble de modules pour la fabrication de différents types de trains de roulement de support de produits à transporter (1 a, 1 b, 1 c) pour un dispositif de transport de produits suspendus,
comprenant
- des pièces de coques de boîtier (9a, 9b) qui peuvent être assemblées par paires à un boîtier de base (3) essentiellement en forme de U ou de V, comprenant des branches (7) s'étendant d'une section de connexion (5) et des sections de chambre creuse (11, 12, 13, 15, 18) formant à l'état assemblé respectivement une chambre creuse de réception de support de galets de roulement, une chambre creuse de réception de support de charge et une chambre creuse de réception de renforcement dans le boîtier de base (3),
- des supports de galets de roulement (19) d'au moins un type, dimensionnés pour la réception fixée dans les chambres creuses de réception de support de galets de roulement et portant respectivement un galet de roulement (25) situé à l'extérieur dans l'état assemblé opérationnel,
- des support de charge (41) d'au moins un type, dimensionnés pour la réception dans les chambres creuses de réception de support de charge et comprenant au moins une portion de fixation de charge (47) situé à l'extérieur dans l'état assemblé opérationnel,
**caractérisé en ce que** l'ensemble de modules comprend en outre:
- des inserts de renforcement (67) d'un premier type dimensionnés pour la réception dans les chambres creuses de réception de renforcement et comprenant au moins une portion de fixation de charge (71) situé à l'extérieur dans l'état assemblé opérationnel,
où pour la fabrication d'un premier type de train de roulement de support de produits à transporter (1a):
un pair des pièces de coques de boîtier (9a, 9b),
un pair des supports de galets de roulement (19) avec des galets de roulement (25) et un des supports de charge (41) peuvent être combinés tout en omettant l'insert de renforcement (47),
et où pour la fabrication d'un deuxième type de train de roulement de support de produits à transporter (1b)
un pair des pièces de coques de boîtier (9a, 9b),
un pair des supports de galets de roulement (19) avec des galets de roulement (25) et un insert de renforcement (67) du premier type peuvent être combinés.

2. Ensemble de modules selon la revendication 1, comprenant en outre des inserts de renforcement (67') d'un deuxième type, différents des inserts de renforcement (67) du premier type, dimensionnés pour la réception dans les chambres creuses de réception de renforcement et comprenant respectivement une portion de fixation de charge (71') situé à l'extérieur dans l'état assemblé opérationnel,
où les inserts de renforcement (67') du deuxième type peuvent, pour la fabrication d'un troisième type de train de roulement de support de produits à transporter (1 c) être combinés avec un pair des pièces de coques de boîtier (9a, 9b) et un pair des supports de galets de roulement (19) avec des galets de roulement (25).

3. Ensemble de modules selon la revendication 1 ou 2, où les pièces de coques de boîtier (9a, 9b) sont identiques.

4. Ensemble de modules selon la revendication 1, 2 ou 3, où les pièces de coques de boîtier (9a, 9b) sont fabriquées en matière plastique.

5. Ensemble de modules selon une des revendications précédentes, où les inserts de renforcement (67) du premier type sont des plaques d'insertion (69) fabriquées d'un matériau mécaniquement plus stable que le matériau des pièces de coques de boîtier (9a, 9b), en particulier fabriquées de métal.

6. Ensemble de modules selon une des revendications précédentes, où la portion de fixation de charge (71) des inserts de renforcement (67) du premier type est un crochet.

7. Ensemble de modules selon la revendication 5 et la revendication 6, où deux plaques d'insertion (69) identiques dans des régions de montage opposées peuvent être reçu côte à côte dans la chambre creuse de réception de renforcement de sorte que les crochets forment un oeillet (73) extérieur.

8. Ensemble de modules selon la revendication 2, où les inserts de renforcement (67') du deuxième type sont des plaques d'insertion (69') fabriquées d'un matériau mécaniquement plus stable que le matériau des pièces de coques de boîtier (9a, 9b), en particulier fabriquées de métal, et où ils ont une plus grande épaisseur de plaque que l'épaisseur des plaques d'insertion (69) du premier type.

9. Ensemble de modules selon une des revendications précédentes, où les pièces de coques de boîtier (9a, 9b) comprennent des sections de chambre creuse (13) qui dans l'état assemblé forment dans le boîtier de base (3) une chambre creuse de réception de transpondeur pour recevoir un transpondeur, en particulier un support RFID.

10. Ensemble de modules selon une des revendications précédentes, où les pièces de coques de boîtier (9a, 9b) comprennent des sections de chambre creuse (15) qui dans l'état assemblé forment dans le boîtier de base une chambre creuse de réception pour recevoir un support d'un élément d'engagement de transfert (55).

11. Ensemble de modules selon une des revendications précédentes, où le support de charge (41) peut être monté de façon mobile avec articulation dans la chambre creuse de réception de support de charge.
